# EUROPEAN PATENT APPLICATION

(11) **EP 4 817 739 A1**
(43) Date of publication of application: **07.10.2026**
(21) Application number: 26169451.7
(22) Date of filing: 31.03.2026
(51) Int. Cl.: B01L 3/00, F16K 99/00

(54) **MICROFLUIDIC CHIP WITH RETAINER FOR VALVE CLOSING BODY**

(30) Priority: 31.03.2025 US 202563781074 P
(71) Applicant: National Research Council of Canada, Ottawa, Ontario K1A 0R6 (CA)
(72) Inventor: SHIU, Pun Pang, Ottawa, K1J 7T6 (CA); MORTON, Keith, St- Bruno-de-Montarville, J3V 3J9 (CA); VERES, Teodor, Montreal, H3V 1H2 (CA)
(74) Representative: Glück Kritzenberger Patentanwälte PartGmbB

(57) **Abstract**

A microfluidic valve comprises: a substrate, relief-patterned at top and bottom surfaces to define: an annular valve seat and a surface for holding an elastomeric membrane inside a generally cylindrical protuberance in the top surface so that the membrane covers the cylindrical inner wall. The relief patterning also provides a through bore defining one valved microfluidic channel and an annular trough around the annular valve seat to which at least one other valved microfluidic channel extends. When the cap is pushed into the recess, it reversibly presses the membrane against the valve seat to form a seal that prevents fluid flow in the channel.

## Description

### FIELD

The present disclosure relates to microfluidic chips and devices based thereon for simplified and reliable valve closing with a simple pressing operation, and more specifically to a microfluidic chip having retaining features thereon for seating a deformable elastomeric membrane, and for fitting a valve closing body into pressed contact with the membrane to permit valve closure without continued contact.

### BACKGROUND

The COVID-19 pandemic in 2020 highlighted the need for instrument-less bio-diagnostic technologies. Individuals' self-testing at home or other low resource environments would drastically reduce the burden on centralized PCR laboratories. Lab-on-chip (LOC) technology can provide the capacity to run these complex assays in a miniaturized device, compared to simple lateral flow devices. An important function of LOCs is the ability to manipulate small volumes with microvalves that may function as a flow control element to time the sequential delivery of liquids. Ideally, the microvalve has low leakage, small dead volume, fast response, backflow resistance, simple structure, low power consumption, and insensitivity to the presence of particles or contaminants.

One drawback of current fabrication technology of microfluidic valves (microvalves) for instrument-less or instrument-free bio-diagnostic technologies is complexity. Typical microvalves may have a stack of three-layer structure: a valve seat, a soft membrane, and a pneumatic control line. These microvalves are typically difficult to scale up and assemble, in addition to often being cost ineffective for single-use applications.

Microvalves typically fall into normally open and normally close categories [2,3,4] and may be further classified as either active or passive valves. For active microvalves, the source of actuation may be mechanical, non-mechanical, or external systems. Typical actuators used to turn on/off these valves include mechanical based using magnetic [5,6] (such as external or built in), electric (such as electrokinetic [7]), piezoelectric [8], thermal (such as bimetallic [9], thermopneumatic [10], or shape memory alloys [11]), or bistable [12]. Typical non-mechanical active valves use electrochemical (such as hydrogel [13]), and phase changes like paraffin melting [14]. The structures of these microvalves may be multi-layer, embedded with dissimilar materials such as permanent magnets, magnetic inductor, soft membrane, shape memory alloy, silicon, silicone, nickel, iron, polydimethylsiloxane (PDMS), polymers, piezoelectric, and others. External source base active microvalves may use pneumatic pressure as the actuation force [15].

In the passive microvalves, it is also separated into mechanical and non-mechanical. Examples of mechanical passive microvalves are check valves [16] that use flaps, membranes, or balls [17]. Non-mechanical passive microvalves such as capillary microvalves [18] use structures to create a higher-pressure barrier that requires the incoming pressure to "burst" open (hydrophobic valve).

An example of an active valve is a pneumatic microvalve [4], which are typically adapted and used as components for automating liquid manipulation in microfluidics. They use an external pump system to provide positive or negative pneumatic pressure as an actuating mechanism. Three-layer structures are common: substrate with microchannel and valve seats, elastomeric membrane, pressure control line, and cover.

Finger actuation microfluidic devices have been previously reported [21-26]. These devices may use traditional methods for installing a manual pump in between two one-way valves at the inlet/outlet. Finger pressing a soft pump to generate flow displacement is typical as one valve used as a vent and forcing liquid moves toward the second valve. These two valves may orient its flow direction opposite each other to create unidirectional flow [23,24,25].

Plug type microvalves [26] may be operated manually using a pin-like turntable component inserted into a PDMS (silicone) microfluidic device. This pin may have a hole allowing liquid passing through when it turned to the open position. When turned in the close position, liquid is blocked.

Valves known in the art have several drawbacks. For example, microvalves using electromagnetic, electrostatic, piezoelectric type of actuation require multiple materials and embedded electrical connection to interface with instruments. Many of these requires traditional microfabrication that is incompatible with mass production methods.

Pneumatic-based microvalves are widely adapted due to their relatively simple operation. However, the pneumatic pressure required to seal the microchannel is high, for example from 5 to 25 psi, to prevent leakage or backflow. Under a continuous operation at this pressure level, the elastomeric membrane is susceptible to delamination.

Fabrication of multiple-layer structured pneumatic valves may also be complicated. It typically involves multiple materials layers that further complicate manufacturing. It also may present difficulties in assembly devices when mass produced. Thus, it also typically increases cost to the manufacturer.

Capillary burst valve are simple microstructures and require fewer to no mechanical moving parts. However, some require application of centrifugal forcing functions at certain rotational speeds to "burst" open the valve [19]. For example, Andersson et al. teaches deposit hydrophobic patch coating at capillary valve locations to improve pressure resistance [27]. It was fabricated via plasma polymerization process of fluorocarbons (C4F8). Unfortunately, it is also a non-scalable manufacturing process.

Some microvalves require complex instrumentation. Reliance on instrumentation such as centrifugal force-based siphon valves or capillary burst valves may also make portability an issue. Centrifugal-based microvalve systems are more suitable for centralized diagnostic laboratory settings [20].

Manual valving often requires two one-way valves combined with a soft pump to prevent backflow [23-26], which typically require many layers (at least 3, and as many as 7).

While some valves are known for handheld microfluidic chips, there is a need for valves that can be kept closed during heating cycles, and for longer durations, without any manual efforts by a user; as well as simpler, lower cost, structures that enable open or closed valves with simplified user interactions.

### SUMMARY

The present disclosure relates to a microfluidic "cap valve" that is capable of controlling the sequence of displacement of liquid volumes in a microfluidic device. The valve has a relatively simplistic design and can be operated manually (finger actuated) and can thus be incorporated into instrument-less microfluidic devices. The valve described herein can function as a "two-way" valve and allows sequential incubation/reaction in multi-step assay protocols, particularly when used in conjunction with soft membrane pressure pumps (no high-pressure pneumatic control line required), while avoiding or minimizing cross-contamination.

According to an aspect of the present disclosure there is provided, a substrate that is relief patterned on two opposite sides to enable a closing body to be retained in a recess, to close a valve on a chip provided with the substrate, as well as possibly one or more cover surfaces. A kit is also provided with the substrate in combination with one or more covers, a membrane for the valve, and/or a tool for releasing the closing body. The closing body is conveniently referred to herein as a "cap".

Other aspects and features of the disclosure will become apparent to those ordinarily skilled in the art upon review of the following description of specific embodiments of the disclosure.

### BRIEF DESCRIPTION OF THE DRAWINGS

Embodiments of the disclosure will now be described in greater detail with reference to the accompanying drawings.
**FIG. 1** is a top view of a microfluidic valve according to an embodiment, depicted without a deformable elastomeric membrane.
**FIGs. 2A,2B** are cross-sectional views taken along the 2A-2A section line as shown in Fig. 1.
**FIG. 3** is a perspective view of a deformable elastomeric membrane according to an embodiment.
**FIG. 4** is a perspective view of a microvalve cap according to an embodiment.
**FIG. 5A-5B** are perspective views depicting the microvalve cap of Fig. 4 engaging with the deformable elastomeric membrane of Fig. 3 when the valve is in an open configuration (Fig. 5A), and a closed configuration (Fig. 5B).
**FIG. 6** is a cross-sectional view depicting a microfluidic valve according to an embodiment, a deformable elastomeric membrane, a microvalve cap, and a resilient member.
**FIG. 7** are top views (left) and side elevation views (right) of the deformable elastomeric membrane (top row) and resilient member (bottom row).
**FIG. 8A****,B** are cross-sectional views of the microfluidic valve, deformable elastomeric membrane, microvalve cap, and resilient member of Fig. 6 in an open configuration (Fig. 8A) and a closed configuration (Fig. 8B).
**FIG. 8C** is a panel showing three states of a flow through the microfluidic valve when the valve is open, the flow being from an annular channel to a central channel;
**FIG. 8D** is a single state showing flow through the microfluidic valve when the valve is open, the flow being from an annular channel to a central channel;
**FIGs. 9A-9B** are perspective cross-sectional views of a microfluidic valve, deformable elastomeric membrane, and microvalve cap according to an embodiment, in an open configuration (Fig. 9A) and a closed configuration (Fig. 9B).
**FIGs. 10A-10B** are partial cross-sectional views of the microfluidic valve (shown in cross-section), the deformable elastomeric membrane, and the microvalve cap of Figs. 9A and 9B, in an open configuration (Fig. 10A) and a closed configuration (Fig. 10B).
**FIGs. 11A-11B** are cross-sectional views of the microfluidic valve (shown in cross-section), the deformable elastomeric membrane, and the microvalve cap of Figs. 9A and 9B, in an open configuration (Fig. 11A) and a closed configuration (Fig. 11B).
**FIG. 12** is a photograph of a microvalve cap, reservoir cap, and tool for engaging the microvalve cap according to an embodiment.
**FIG. 13** is a perspective view of the tool of Fig. 12.
**FIG. 14** is a top view of the tool of Fig. 12.
**FIG. 14A** is a cross-sectional view taken along the 14A-14A line of Fig. 14.
**FIG. 15** is a bottom view of the tool of Fig. 12.
**FIG. 16** is a first side elevation view of the tool of Fig. 12.
**FIG. 17** is an end elevation view of the tool of Fig. 12.
**FIG. 18** is a second side elevation view of the tool of Fig. 12.
**FIG. 19** is a graphical representation of a microfluidic device comprising a microfluidic valve according to an embodiment, and a method of operating same.
**FIG. 20** is a perspective view of a microfluidic device according to an embodiment having two capped microfluidic valves, three soft membrane reaction chambers, and a capped reservoir.
**FIG. 21** is a perspective view of the reservoir cap of Fig. 19.
**FIG. 22** is a photograph of a microfluidic valve (without a cap) and two adjacent soft pump reaction chambers on a microfluidic device according to an embodiment.
**FIG. 23** is a photograph of two microfluidic devices according to an embodiment, each having two uncapped microfluidic valves, three soft pump reaction chambers, and a reservoir.
**FIGs. 24A-C**and **FIGs. 25A-C**are photographs depicting an example of a microfluidic device with two microfluidic valves, the photographs depicting migration of a test solution (yellow) through the device.
**FIGs. 26A-26B** are photographs of a microfluidic device having two microfluidic valves each in the closed configuration, three soft pump reaction chambers, and a reservoir, the photographs depicting three colored test solutions (yellow, blue and green) in separate chambers.
**FIG. 27** is a graphical rendering of a microfluidic device according to an embodiment, for a point of care assay.
**FIG. 28** is a top view of a design for a microfluidic device according to an embodiment, the device comprising a sample input (reservoir), five microfluidic valves, three reagent chambers, two reaction channels, a vent valve, and a waste chamber having a TPE button for pressure generation.
**FIG. 29** is a close-up perspective view of the microfluidic device of Fig. 28.

### DETAILED DESCRIPTION

One or more illustrative embodiments have been described by way of example. Described herein are apparatuses, methods and uses relating to microfluidic valves (or "microvalve") for microfluidic systems. It will be appreciated that embodiments and examples are provided for illustrative purposes intended for those skilled in the art. All references to embodiments, examples, aspects, kits, methods, and the like are intended to be illustrative.

Disclosed herein are microfluidic valves for controlling the sequence of displacement of liquid volume, for example from 50 µL to a few mL, in a microfluidic device, for example an instrument-less microfluidic device. Such valves may be used for typical bio-diagnostic assay microfluidic applications, such as microfluidic device sample preparation or Point-of-Care (POC) diagnostics.

The disclosed microfluidic valves function as a "two-way" valve allowing sequential incubation/reaction in multi-step assay protocols without creating cross-contamination from other reagents. Microfluidic valves and microfluidic devices containing said valves may not require high-pressure pneumatic control lines. The disclosed microvalves comprise cap which, with a simple operation, can be pressed down onto the valve seat to seal off a microchannel. Removing the cap from engagement with the valve seat opens the microchannel. This cap component of the cap valve may also be reusable. Such microvalves may be informally referred to as "cap valves".

The disclosed microvalves may be used without instrumentation and may be implemented in instrument-less and portable diagnostic microfluidic devices for use in remote, low resource, frontline environments. Microvalves disclosed herein have a less complicated and costly multi-layer structure than previous valves known in the art. The disclosed microvalves may be operable in conjunction with low negative pressure, for example as little as -0.1 to -0.5 psi, from a manual small membrane soft pump, thus providing the building blocks towards a manual portable microfluidic system for POC diagnosis. Low bonding/sealing at the valve may be used as the cap applies a strong enough pressure to control flow. Lower pressures within the device and microvalve may avoid or minimize risk of delamination of sealing covers compared to traditional microvalves. The disclosed microvalves may also be used in a non-centrifugal based microfluidic system, thus offering the potential of a simpler, lighter weight, smaller footprint, and highly portable instrument compared with centrifugal based microfluidic systems. Devices having the microvalves used herein may be suitable for users who are elderly or children.

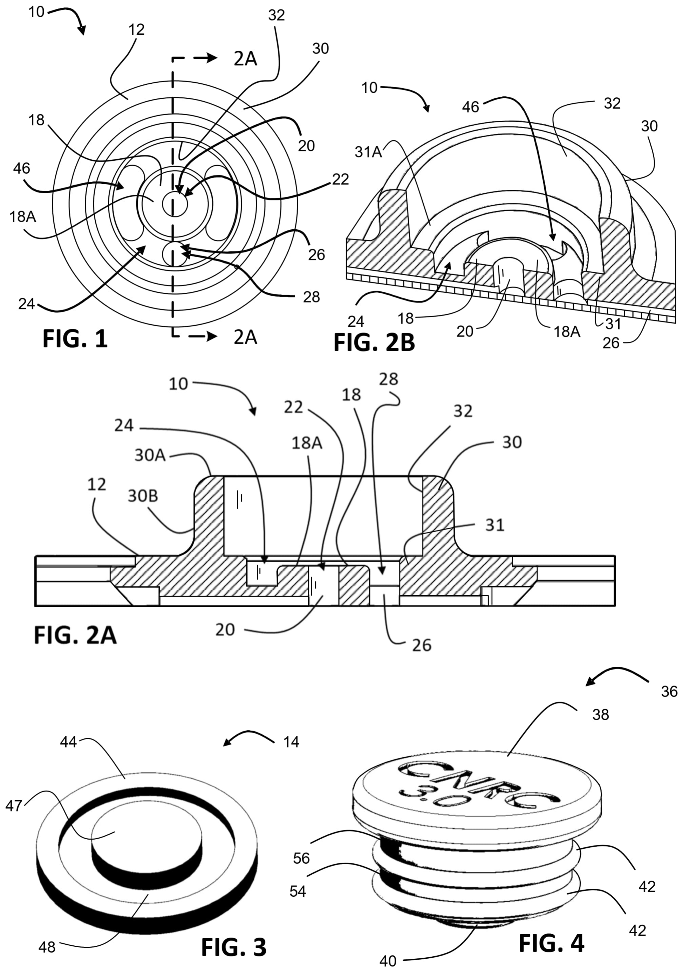

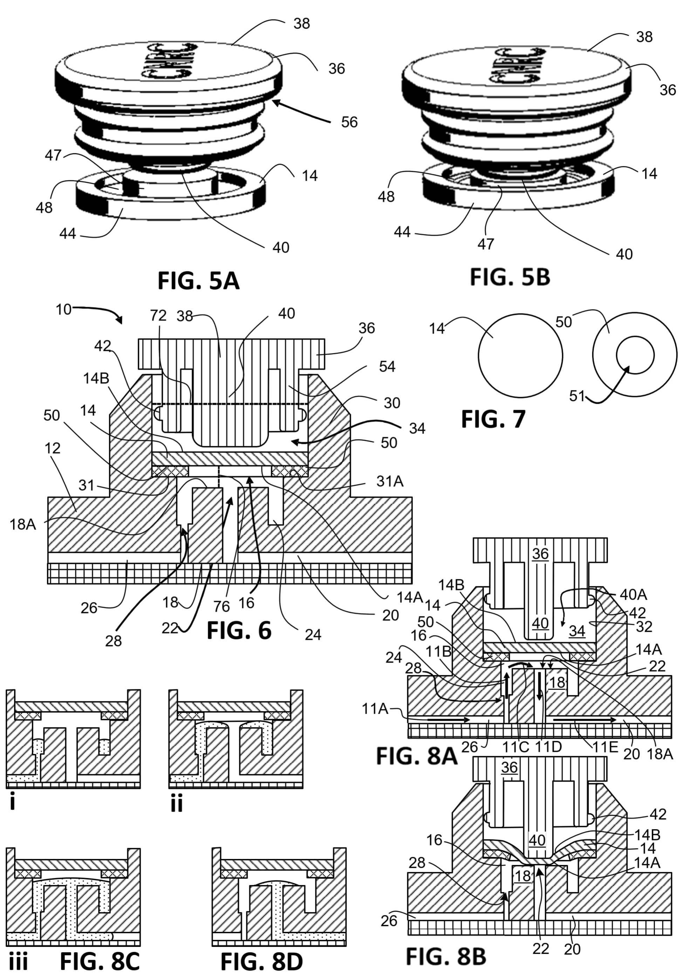

Referring to Figs. 1-3 and 6, microfluidic valve 10 comprises a substrate 12 having a relief patterned surface, a deformable elastomeric membrane 14 extending across a portion of the relief patterned surface, membrane 14 comprising a lower surface 14A and an opposing upper surface 14B, lower surface 14A of membrane 14 and the portion of the relief patterned surface defining a valve region 16, a valve seat 18 defined by the relief patterned surface and disposed in valve region 16, valve seat 18 comprising a surface 18A facing the lower surface 14A of membrane 14, a first microfluidic channel 20 passing through the valve seat and terminating at a first opening 22 disposed on the surface 18A, a recessed surface 24 defined by the relief patterned surface and surrounding the valve seat 18, a second microfluidic channel 26 terminating at a second opening 28 at or near the recessed surface 24, a guiding sidewall 30 formed by substrate 12 and surrounding membrane 14, an inner surface 32 of the sidewall 30 and an upper surface of the membrane 14B defining a recess 34 configured to receive at least part of a microvalve cap 36. Microfluidic valve 10 is reversibly configurable between: an open configuration (Fig. 8A), wherein first and second channels 20, 26 are in fluid communication, and a closed configuration (Fig. 8B), wherein membrane 14 is reversibly depressed by a mandrel of the cap such that the membrane forms a seal around the first opening, thereby preventing fluid flow between the first and second channels.

Referring to Figs. 8A and 8B, valve 10 is reversibly configurable between an open configuration (Fig. 8A) and a closed configuration (Fig. 8B). Microvalve cap 36 may be actuated between a first position (Fig. 8A) and a second position (Fig. 8B) to move valve 10 between the open and closed configurations. Microvalve cap 36 may be moved or actuated within recess 34. The actuation of microvalve cap 36 may be mechanical actuation, such as by a user gripping and moving the microvalve cap, or by any other suitable means.

As shown in Fig. 8A, in the open configuration, first and second channels 20, 26 are in fluid communication. Fluid, such as a liquid or gas, may travel between first opening 22 disposed on surface 18A and second opening 28 located at or near the recessed surface 24. The fluid communication between the first and second channels 20, 26 may also include valve region 16. For example, a fluid, such as a sample or reaction solution, may pass through the first channel 20, over valve seat 18 via first opening 22, into the recessed surface 24 and through second channel 26 via second opening 28. Another example of fluid flow through the valve region is depicted with arrows 11A-11E. As depicted in Fig. 8A, in the open configuration, microvalve cap 36 may not be engaged with membrane 14. Microvalve cap 36 may be spaced from membrane 14 such that the cap 36 is not contacting or abutting membrane 14. In some embodiments, part of cap 36, such as an end 40A of mandrel 40, is fastened to a top surface 14B of membrane 14. In such embodiments, cap 36 is engaged with membrane 14 in the open and closed configurations.

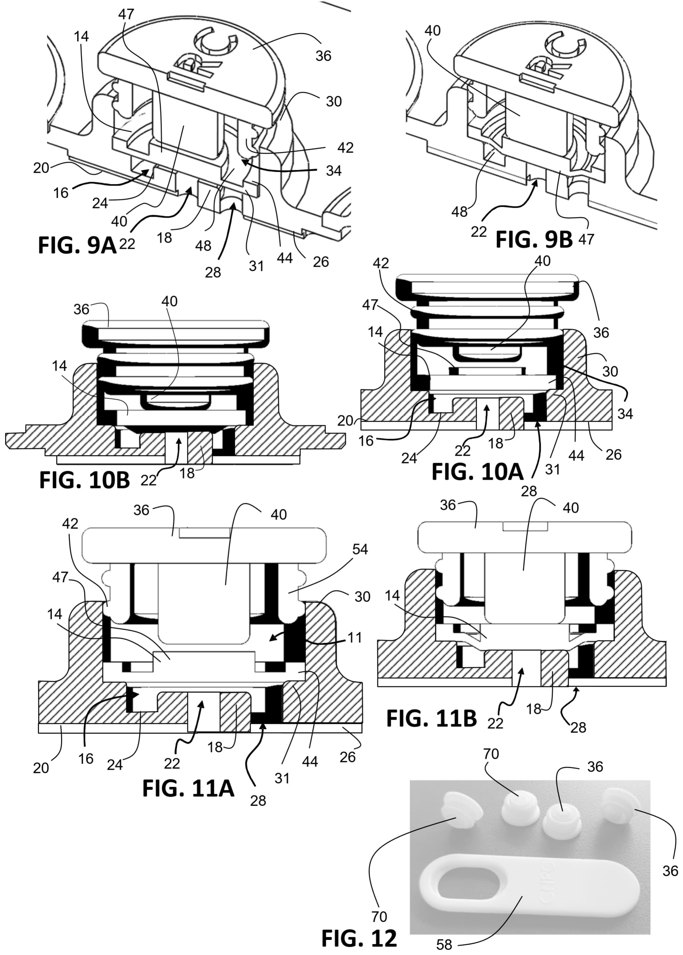

Referring to Fig. 8B, valve 10 is depicted in the closed configuration. In the closed configuration, membrane 14 is reversibly depressed by mandrel 40 such that the membrane forms a seal around first opening 22, thereby preventing fluid flow between the first and second channels 20 and 26. As depicted in Fig. 8B, the seal around first opening 22 may be formed by substantially continuous contact between bottom surface 14B of membrane 14 around a perimeter of first opening 22 on surface 18A such that fluid is substantially or entirely prevented from entering or leaving the valve region 16 through first opening 22. The sealing of membrane 14 around first opening 22 is also depicted in Figs. 9A, 9B, 10A, and 10B. In some embodiments, membrane 14 comprises a sealing member (not pictured) that is configured to engage with the valve seat, for example by insertion into first opening 22, to control flow between microchannels. The sealing member may have a suitable configuration or shape to be inserted into first opening 22, such as a conical configuration aligned to be at least partially inserted into first opening 22 in the closed configuration.

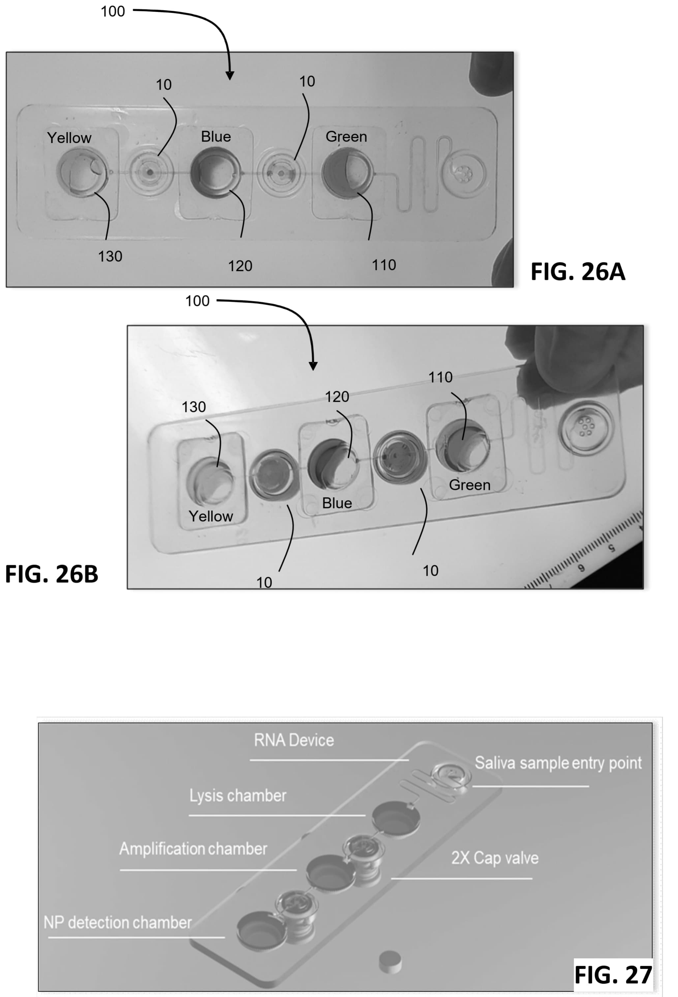

Valves 10 in the closed configuration may also prevent cross-contamination or back flow between fluidically connected chambers, such as chambers 110, 120, and 130 of the microfluidic device 100 depicted in Figs. 26A and 26B. For example, valve 10 may be set in the closed configuration while a solution is pumped from one chamber to another to prevent cross-contamination or backflow. Figs. 26A and 26B illustrate that minimal mixing of the three colored fluids from chambers 110, 120, and 130 occurred in the valve regions 16 of each valve 10 while a solution (green) was pumped from the reservoir 140 to the first chamber 110.

Valve 10 is, at least partially, formed by substrate 12. The substrate may also form at least part of a microfluidic device. In some embodiments, the substrate has a relief pattern that defines at least part of a microfluidic network of a microfluidic device comprising said substrate. Parts of valve 10 may be formed by substrate 12. For example, sidewall 30 may be formed by substrate 12. A relief-pattern of substrate 12 may define one or more parts of valve 10. For example, one or more of: the valve seat 18, recess 24, first opening 22, first channel 20, second opening 28, second channel 26, sidewall 30, recess 34, and others, may be defined by the relief patterned surface of substrate 12. Valve 10 may be formed by the relief-pattern of the substrate and then combined with the membrane 14, resilient member 50, and cap 36 to assemble the fully actuatable valve 10.

The substrate may be composed of any polymer material suitable for constructing microfluidic devices, which in some embodiments may be natively hydrophobic and remain untreated. The substrate may be composed of a polymer material that is the same or different as the deformable elastomeric membrane. Some examples of polymer material suitable for the substrate are thermoplastic elastomers (TPE), polydimethylsiloxane (PDMS), hard thermal plastics (TP) and the like, but TPs and TPEs harder than the membrane are preferred to limit deformations within the valve other than that of the membrane. Hard thermal plastics include, for example, cyclic olefin copolymers (COC, e.g. Zeonor^{™}), polystyrene (PS), polypropylene (PP), poly(methylmethacrylate) (PMMA) and the like. Blends of polymer materials may be utilized, as well as the full variety of suitable formulations of each polymer. The substrate layer may be a hybrid of plastic materials where a portion of the substrate comprises one plastic material and one or more other portions comprise a different plastic or other material. In some embodiments, the substrate may be glass, metal, ceramic or a composite or mixture thereof.

Substrate 12 may be combined (e.g. sealingly bonded) to one or more covers to form a microfluidic device. The cover may cooperate with the substrate to potentially reduce evaporation and contamination. The cover may comprise a surface enclosing the relief patterned surface to define one or more microfluidic networks that implicate one or more chambers, valves, receptacles, ports, vents, channels, and other microfluidic features. In some embodiments, the surface of a cover may provide a ceiling or floor of any of said microfluidic features. Channels may interconnect various chambers and/or open externally to an external environment, tubing to other supplies, or couplers to devices like loading pins, micropipettes, or syringes. Each channel may interconnect at least one chamber to another chamber, or to a port of the device. In some embodiments, each port may be of one of three uses: a liquid supply or extraction port; a pressurized gas supply or extraction port; or a passive vent, open to ambience, and in some embodiments a same port can be used for two or more of these three uses, at different time points in operation.

In some embodiments, the substrate bears surface relief patterns, including segments of microfluidic channels, on both of two opposite surfaces that are provided for sealed meeting with covers, and in other embodiments, the cover(s) bears surface relief patterns that define (with flat surfaces of the substrate) microfluidic channels. In some embodiments, the substrate and cover are bonded together, or adapted to bond together, to define the enclosure. In some embodiments, to increase the number of fluidic operations on liquids in a chamber, the enclosure comprises the chamber, the enclosure being defined with a seal between the relief patterned substrate and a cover of the device. In some embodiments, the bond between the one or more covers and the cover-meeting surface of the substrate is strong enough to withstand suitable positive and negative pressures. Valve 10 may be operated in relatively weaker pressures, such as -0.1 to -0.5 psi, and thus the bond between the cover and substrate may be suitable for weaker pressure ranges.

Like the substrate, the cover may be composed of any suitable material, which in some embodiments may be natively hydrophobic and remain untreated. In some embodiments, the cover may be glass, metal, ceramic or a composite or mixture thereof. With respect to covers, there is a particular use for glass and transparent plastic to facilitate viewing of liquid during displacements, and in some cases, for readout and inspection. In some embodiments, the cover comprises a polymeric material, such as a thermoset, or a thermoplastic material such as a thermoplastic elastomer. In some embodiments, the polymeric material may be biocompatible, exhibit low reactivity with subject liquids, and/or not be permeable to gas. The wide variety of polymers useful for microfluidics are well known. In some embodiments, the thermoplastic is polycarbonate or zeonor.

Referring to Figs. 6 and 8-11, valve region 16 is defined by lower surface 14A of membrane 14 and substrate 12. Valve region 16 may comprise two or more microchannels disposed within the valve region such that they are fluidically connected when the valve 10 is in the open configuration. For example, Fig. 6 depicts first channel 20 and second channel 26 terminating within the valve region 16. First opening 22 may be disposed above second opening 28. For example, surface 18A and first opening 22 of valve seat 18 may be above the recessed surface 24 and second opening 28.

In some embodiments, the valve region comprises three or more microchannels. Valve seat 18 may define a plurality of openings that are each connected to a respective microchannel. Membrane 14 may form a seal around two or more of the plurality of openings disposed on valve seat 18, when valve 10 is in the closed configuration. Valve region may comprise two or more microchannels disposed in or adjacent to recessed surface 24. The two or more microchannels within recessed surface 24 may be fluidically connected to the one or more microchannels disposed in valve seat 18 when the valve is in the open configuration, and not fluidically connected when the valve is in the closed configuration.

Referring to Figs. 1, 2A and 2B, valve seat 18 is disposed in valve region 16 and comprises first opening 22 of first channel 20. Valve seat 18 also defines a contacting surface 18A facing a lower surface 14A of membrane 14 (Fig. 6), which may be rounded, chamfered, or substantially square (up to limits of forming) in different embodiments. Valve seat 18 may be configured to receive part of membrane 14 in the closed configuration, for example a central part of membrane 14. Valve seat 18 may have an annular configuration as depicted in cross-section in Fig. 2B. Annular valve seats may also define a surface 18A comprising a rim surrounding first opening 22. The valve seat 18 may have an outer diameter 72 spanning between inner surface 32 of about 10 mm and an inner diameter 74 of about 5 mm (Fig. 6). Valve seat 18 may have a thickness of about 1.5 mm. An outer rim of the valve may have a thickness of about 1 mm.

Substrate 12 may define a recessed surface 24 surrounding valve seat 18. Recessed surface 24 may have a substantially circular configuration in cross-section, for example the surface 24 may be a recessed annulus. Surface 24 may define one or more slots 46 in the recessed surface configured to enable visual confirmation of whether a liquid is present in the first recess (Fig. 2B). For example, surface 24 may define two slots 46. Slot 46 may provide a transparent window for a user to visually inspect if fluid has entered the valve region 16 and, in so doing, may avoid the need for feedback liquid manipulation systems such as optical machine vision detection.

Referring to Figs. 3, 5A, 5B, 6 and 7, deformable elastomeric membrane 14 is disposed across substrate 12 and separates recess 34 from valve region 16. Membrane 14 may be deformable such that it can be deformed from a relatively planar conformation to a substantially concave conformation via movement of microvalve cap 36 from the open to closed configurations. Membrane 14 may also have sufficient resiliency to substantially return to its original shape when microvalve cap 36 moves from the closed to open configurations. In some embodiments, the distance from the bottom surface 14B of the membrane and surface 18A of the valve seat is about 0.5 mm to about 1.5 mm when microvalve cap 36 is in the open configuration.

Referring to Fig. 3, membrane 14 may have one or more of: rim 44, mandrel receiving member 47, and recessed portion 48 therebetween. When all three are present as depicted in Fig. 3, the membrane assumes a symmetric shape. While mandrel receiving member 47 is named this way, the membrane 14 maybe inverted in which case the thickened central region would be a valve seat meeting member. Furthermore the rim 44 may be thickened on one side, as shown or symmetrically on both sides. Rim 44 may be disposed at or near a perimeter of membrane 14 and may engage or secure membrane 14 to an inner surface 32 of guiding sidewall 30. Mandrel receiving member 47 may be configured to receive an end 40A of mandrel 40. For example, member 47 may have a central annular configuration for receiving and aligning mandrel 40 when microvalve cap 36 is moved from the open to the closed configuration.

At least part of membrane 14, such as the mandrel receiving member 47, may be fused to at least part of the microvalve cap 36, such as end 40A of mandrel 40. Recessed portion 48 may have a smaller diameter in cross section than other parts of membrane 14, such as mandrel receiving member 47 or rim 44. As shown in Figs. 9A, 9B, 11A, and 11B, recessed portion 48 may substantially deform as membrane 14 moves from the open configuration (Fig. 11A) to the closed configuration (Fig. 11B).

Membrane 14 may connect to guiding sidewall 30 by any suitable means. For example, membrane 14 may be coupled to valve 10 such that it is removably placed over substrate 12. For example, rim 44 may abut against a shelf 46 that extends inwardly from sidewall 30. In some embodiments, membrane 14 is fastened to sidewall 30 by a suitable means, such as adhesive, heat welding and others. In some cases, the valve 10 is assembled by inserting membrane 14 within sidewall 30 until part of the membrane 14, such as rim 44 abuts an upper surface 46A of shelf 46. In some embodiments, a resilient member 50 is disposed between membrane 14 and shelf 46. In such embodiments, the membrane 14 abuts an upper surface of resilient member 50. Although Figs. 6, 8A, 8B, 9A, and 9B depict membrane 14 as being entirely disposed within sidewall 30, in some cases membrane 14 may be "overmolded" such that the membrane spans across top rim 30A of sidewall 30. Overmolded membrane 14 may span across side wall 30 such that it defines the recess 34 and valve region 16, but also extend over an outer surface 30B of sidewall 30. Overmolded membrane 14 may abut one or more of resilient member 50 and shelf 46.

Deformable elastomeric membrane 14 may comprise any suitably flexible polymeric material having sufficient elasticity to undergo deformations by microvalve cap 36 in the closed configuration and still return to an original shape when the microvalve cap 36 is moved to the open configuration. The elastomeric membrane may comprise a thermoplastic elastomer (TPE). The TPE may be, for example, a styrene ethylene butylene styrene block copolymer (SEBS), a styrene-butadiene (SBS), a styrene iso-butylene styrene (SIBS), an ethylene-vinyl acetate copolymer, a styrene-isoprene-butadiene block copolymer, an ionomeric TPE, a single phase melt processable TPE, a transparent medical TPE (e.g. Mediprene^{™}), oil-free TPE (e.g. Mediprene^{™} OF 400M, OF 600M, OF 800M), Mediprene^{®} 500M or the like or any blend thereof with or without various fillers and enhancers for mechanical, optical, thermal, or chemical modification or effect. The membrane has a thickness and a Young's modulus that permit deformation. As the thickness of the membrane increases, the stiffness may increase to maintain suitable resilient flexibility. The thickness may have a mean thickness of about 200 µm (e.g. 180-600 µm). Membrane 14 may have an outer diameter of about 10 mm and a valve seat has an outer diameter of 4.6 mm. Although membrane 14 is depicted as having a substantially cylindrical shape, other suitable shapes are possible.

Referring to Figs. 6, 7, 8A, and 8B, the microvalve may further comprise resilient member 50 configured to increase elastic response of membrane 14. Increasing the elastic response of membrane 14 may be desirable if membrane 14 is deformed into the closed configuration for a long duration or if the membrane 14 is under heating conditions for a period of time. Such condition may decrease the elastic response of membrane 14 by either decreasing its resilient qualities or increasing its adhesive qualities, causing membrane 14 to adhere to part of substrate 12, such as valve seat 18. Resilient member 50 may abut at least part of the bottom surface 14A of membrane 14 and extend inwardly. Resilient member 50 may be a resilient membrane defining an aperture 51 for receiving at least part of the membrane 14 and microvalve cap 36 in the closed configuration (Fig. 8B). In some embodiments, resilient member 50 has a ring configuration.

Resilient member 50 may comprise any resilient material that increases the elastic response of membrane 14. For example, resilient member 50 may comprise a polycarbonate. Resilient member 50 may have a thickness of about 100 µm.

A person of skill in the art will understand that other structures for increasing the elastic response of membrane 14 may be used either instead or in addition to resilient member 50. For example, membrane 14 may be configured to reduce stiction between itself and valve seat 18, such as by an adhesion moderator. Suitable examples of adhesion moderators include surface roughening of at least part of lower surface 14A, or an additional structure extending across part of lower surface 14A where contact occurs with valve seat 18, the additional structure comprising a material with a lower adhesive quality than membrane 14.

Referring to Figs. 8C, a panel is showing three steps in a flow from an annular channel 26 to central channel 22. At step i, the liquid has risen to partly occupy the annular trench 24. By step ii, the liquid fills the trench and has covered the valve seat. By step iii, the liquid has fallen into the central channel 22 and is proceeding along this channel. Fig. 8D shows a flow in the reverse direction, which is simpler, and may be more favourable as far as avoiding dead volumes is concerned. The liquid simply covers the valve seat, and then grows to creep into the trench. Once the liquid meets the bottom of the trench, it will spread out until it meets the annular channel 26.

Referring to Figs. 1, 9A, 9B, 10A, 10B, 11A, and 11B, guiding sidewall 30 at least partially surrounds membrane 14 and is configured to receive and engage microvalve cap 36. Inner surface 32 of the sidewall 30 and an upper surface of the membrane 14B define a recess 34 configured to receive at least part of a microvalve cap 36. Recess 34 may be substantially cylindrical. Inner surface 32 and microvalve cap 36 may be configured to engage such that movement of the microvalve cap is at least partially hindered, such as an interference fit. Cap 36 may move within recess 34 to move membrane 14 and valve 10 between the open and closed configurations.

Other configurations for limiting movement of cap 36 within recess 34 may also be used. For example, inner surface 32 may have a back stop (not pictured) configured to prevent cap 36 from being removed entirely from valve 10. In some cases, the backstop is used to limit the range of movement of cap 36, preferably in embodiments where mandrel 40 is fused or adhered to upper surface 14B of membrane 14. Inner surface 32 may also define one or more locking grooves that are configured to receive gripping element 42 of cap 36. Such configurations may be understood as a "snap-fit". The grooves may releasably lock the microvalve cap 36 in one or more of the open or closed configurations.

Guiding sidewall 30 may comprise a ledge 31 extending inwardly from inner surface 32 toward the valve seat 18. A top surface 31A of ledge 31 may be above surface 18A of valve seat 18 and spaced such that membrane 14 may move between the open and closed configurations.

Referring to Figs. 4-6, microvalve cap 36 may be used to engage with membrane 14 to actuate valve 10 between the open and closed configurations. Microvalve cap 36 comprises a cap head 38, a mandrel 40 extending from the cap head, and a gripping element 42 for engaging with the guiding sidewall. Cap 36 may also define a tool receiving section 52 between the cap head 38 and the gripping element 42.

Cap 36 comprises cap head 38 configured for gripping by a user. To actuate the valve 10 from the open to the closed configuration, a user may push down on a part of microvalve cap, such as cap head 38, to move cap head 38 within recess 34 and deform membrane 14 to form a seal around first opening 22. To actuate the valve from the closed to the open configuration, the user may pull part of microvalve cap 36, such as cap head 38, to disengage bottom surface 14A of membrane 14 from valve seat 18 thereby permitting fluid communication between first and second openings 22 and 28.

Mandrel 40 extends from cap head 38 and is configured to engage with upper surface 14B of membrane 14. For example, mandrel 40 may have a substantially cylindrical shape. End 40A may engage with the membrane when cap 36 is actuated to the closed configuration. In some embodiments, end 40A is secured, fused or otherwise attached to upper surface 14B of membrane 14, for example end 40A may be fastened to mandrel receiving member 47. Mandrel 40 may engage with mandrel receiving member 47 configured to abut and receive end 40A of mandrel 40.

Cap 36 comprises a gripping element 42 configured to engage with guiding sidewall 30 to reduce or prevent movement of the microvalve cap 36. Referring to Figs. 5A, 5B, and 6, gripping element 42 may comprise one or more flanges, preferably two flanges, configured to abut inner surface 32 of sidewall 30. Gripping element 42 may also be one or more bumps or protrusions configured to grip inner surface 32. Gripping element 42 may be configured to form an interference fit with sidewall 30 when inserted into recess 34. Gripping element 42 may be mounted to a gripping member 54 extending from cap head 38. Gripping member 54 may be spaced from the mandrel 40 and may be deformable such that a slight bend may occur when gripping element 42 engages with sidewall 30. In some cases, gripping member 54 biases gripping element 42 towards sidewall 30 when cap 36 is inserted into recess 34. Although gripping element 42 is depicted as extending from or mounted to gripping member 54, gripping element 42 could extend from another part of cap 36, such as mandrel 40.

Gripping element 42 may be spaced from cap head 38 to define a tool receiving section 56 spanning between cap head 38 and gripping element 42. Receiving section 56 may be configured to receive part of a cap engaging tool 58 for actuating or moving cap 36 within recess 34. In some cases, tool 58 may be used to completely remove cap 36 from valve 10. Tool receiving section 56 may comprise or define additional gripping elements, such as a textured surface or raised bumps/protrusions, to increase the grip of tool 58 on cap 36.

Referring to Figs. 12-18, a tool 58 for engaging microvalve cap 36 or cap 70 is depicted. Tool 58 may be used to move cap 36 between open and closed configurations or remove cap 36 entirely from valve 10. Tool 58 may be used to actuate caps 36 that are attached or not attached to membrane 14. In embodiments where cap 36 is snap-fit with sidewall 30, tool 58 may be used to move gripping member 42 out of engagement with the corresponding groove of sidewall 30.

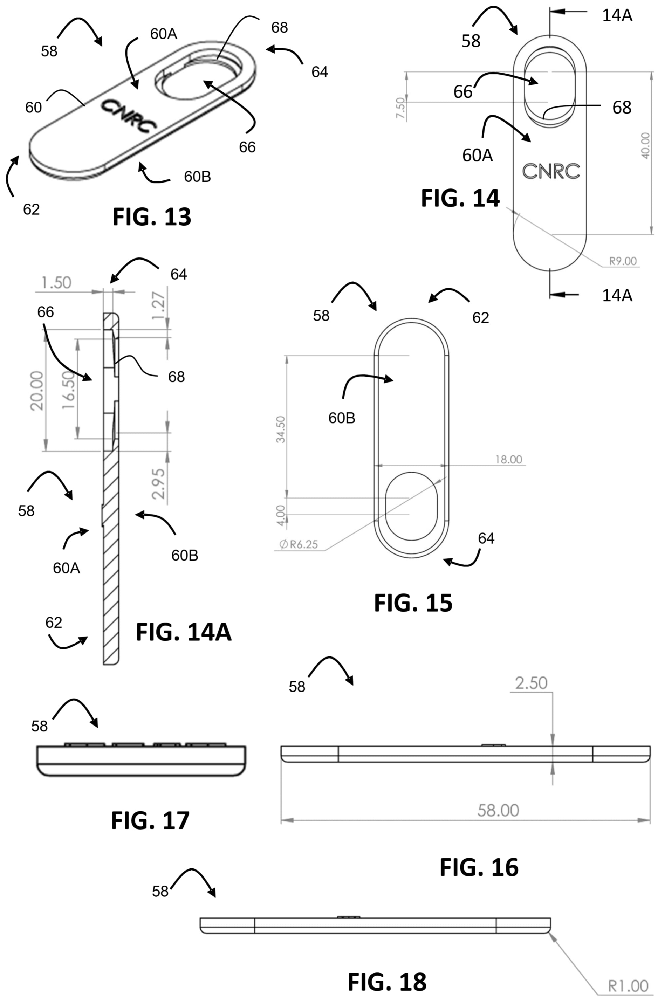

Tool 58 may comprise tool body 60 having a first face 60A and an opposing second face 60B. Tool body 60 may also have a handle part 62 configured to be grasped by a user. Handle part 62 may be spaced from a tool part 64, such that a user can grip the tool 58 and actuate it to move cap 36 to the open configuration, or remove cap 36 from the valve 10. Tool part 64 may define an opening 66 configured to receive and abut at least part of the microvalve cap, such as tool receiving section 56. When tool 58 is engaged with the cap 36, movement of handle part 62 by the user may cause the cap 36 to move within valve 10. For example, a user may engage cap 36 in the closed configuration, and raise handle part 62 relative to tool part 64 in a hinge-like motion to move cap 36 to the open configuration, or remove cap 36. In some cases, linear motion of handle part 62 towards the valve 10 may actuate the cap from the closed configuration to the open configuration, or remove cap 36 entirely. Although opening 66 is depicted as an aperture with a continuous perimeter in Figs. 12-18, opening 66 may have an open end, such as in a fork-like configuration. In some embodiments, a first diameter of the opening at the first face 60A is greater than a second diameter at the second face 60B. Opening 66 may comprise one or more engagement members 68 (Fig. 14A) configured to engage with the tool receiving section 56. Engagement member 68 may have a ramp or wedge surface configured to drive the cap 36 away from valve 10 as the tool is moved in a linear fashion and the cap 36 rides along the ramp or wedge.

In another aspect, there is provided a microfluidic device comprising one or more microfluidic "cap valves" as described herein. The device may comprise a substrate and one or more covers sealingly bonded thereto, such as the substrates and covers described hereinabove. In some embodiments, the device comprises a clear or transparent material which may assist in allowing a user to visually determine the location of fluids throughout the microfluidic network.

As used herein, "soft membrane pressure pump" refers to a microfluidic chamber enclosed by a membrane comprising a soft elastomeric material, for example a thermoplastic elastomer (TPE). The chamber itself may be a reaction chamber which can perform various functions, e.g., mixing, performing reactions, assay incubation, etc. When the soft membrane is pressed, it acts as a pneumatic pressure pump by creating a negative pressure drawing liquid into the chamber from elsewhere on the device (e.g. from a sample input receptacle). The membrane may be operated manually, e.g., by pushing the membrane down with one's finger (as if pushing a button). In some embodiments, the membrane when operated may generate negative pressure as little as -0.1 to -0.5 psi.

As used herein, "soft pump reaction chamber" refers to a soft membrane pressure pump as defined above which comprises a reaction chamber enclosed by a soft membrane.

In some embodiments, there is provided a microfluidic device comprising a microfluidic network defined by a relief-patterned substrate, the microfluidic network comprising: a receptacle configured to receive a liquid; a first reaction chamber fluidically connected to the receptacle; a first microfluidic valve as described herein, wherein the first channel of the first microfluidic valve is fluidically connected to the first reaction chamber; and a manually operable soft membrane pressure pump configured to drive fluid flow within the microfluidic network via negative pressure, wherein the second channel of the first microfluidic valve is fluidically connected to the pressure pump.

In some embodiments, the soft membrane pressure pump is a second soft pump reaction chamber.

In some embodiments, the microfluidic network further comprises: a second microfluidic valve as described herein, wherein the first channel of the second microfluidic valve is fluidically connected to the second soft pump reaction chamber; and a third soft pump reaction chamber fluidically connected to the second channel of the second microfluidic valve, configured to drive fluid flow within the microfluidic network via negative pressure.

In some embodiments, the first reaction chamber is a first soft pump reaction chamber configured to drive fluid flow within the microfluidic network via negative pressure. In some embodiments, the device may comprise additional soft pump reactions and/or additional microfluidic valves.

In some embodiments, the microfluidic device is instrument-less, such as an instrument-less diagnostic device. The device may be portable.

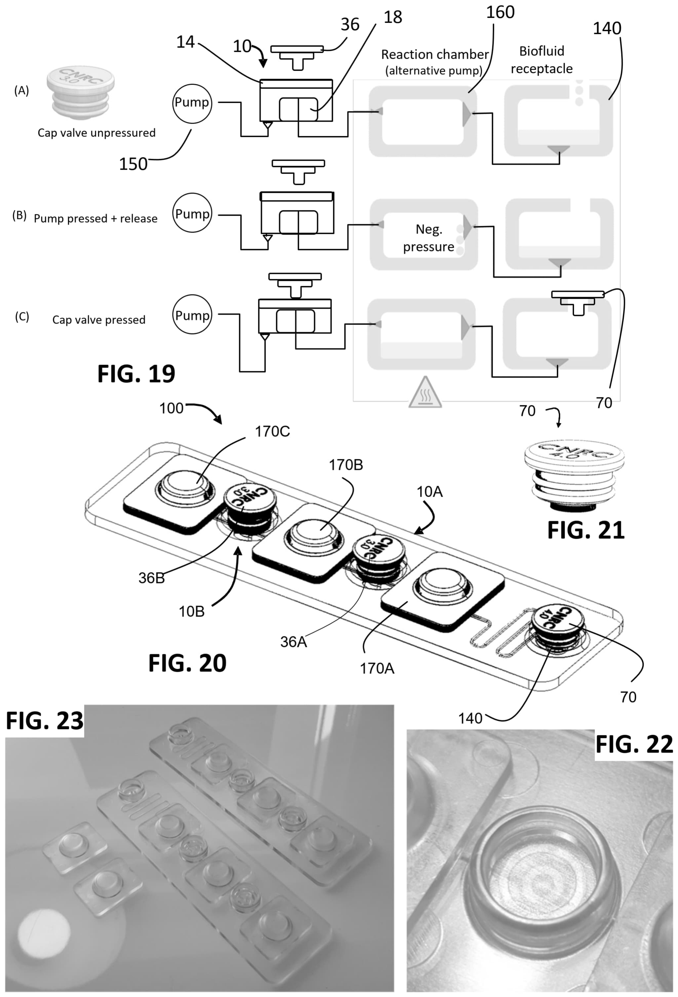

Fig. 19 shows a graphical representation of a microfluidic device according to an embodiment and further shows its method of operation. The device comprises, in sequence, a biofluid receptacle, a reaction chamber (e.g. a soft pump reaction chamber) fluidically connected to the receptacle, a microfluidic valve fluidically connected to the reaction chamber, and a pump (e.g. a soft membrane pressure pump such as a soft pump reaction chamber) fluidically connected to the valve. The reaction chamber may be heated using a heat source.

The device illustrated in Fig. 19 may be operated as follows: first, a biofluid sample is added to the receptacle 140 (Fig. 19A). Second, while the valve 10 is in an open configuration, the pump 150 is operated to generate negative relative pressure drawing the biofluid into the reaction chamber 160. For example, with a finger pump, the pressing of the pump increases pressure in the reaction chamber which bubbles through the biofluid sample in the receptacle, the bubbles venting through the opening port through which the sample was added. Then release of the elastic finger pump draw increases suction of the liquid, and the biofluid flow into the reaction chamber 160 (Fig 19B). Alternatively, if the reaction chamber 160 is a soft pump reaction chamber, it could be operated to transfer the biofluid to the chamber. In such embodiments, the valve may be in the closed configuration when the soft pump reaction chamber is actuated to pump fluid from the receptacle 140. Third, once the biofluid is in the reaction chamber 160, the valve 10 and the receptacle 140 are capped (Fig. 19C). Mixing and assay incubation can then be performed on the biofluid within the reaction chamber 160; once incubation is complete, the caps 36 and 70 can be removed and the reaction product can be moved to another area of the device, e.g., to another reaction chamber.

Fig. 20 shows a graphical representation of a microfluidic device 100 according to another embodiment, wherein the device comprises, in sequence: a receptacle 140; a first soft pump reaction chamber 170A; a first microfluidic valve 10A; a second soft pump reaction chamber 170B; a second microfluidic valve 10B; and a third soft pump reaction chamber 170C. The receptacle 140 is reversibly sealed by cap 70 (e.g. a cap as shown in Fig. 21) and the valves 10A, 10B are each reversibly sealed by a valve caps 36A, 36B as described herein and as illustrated in Fig. 5. Photographs of the device with the caps removed are provided in Figs. 22 and 23.

An example sequence of steps for using device 100 of Fig. 20 is as follows:
1. Push down on cap 36A to close valve 10A. This step may be optional as the valves 10A, 10B may already be in the closed configuration.
2. With cap 70 removed, insert test sample into receptacle 140.
3. Press first soft pump reaction chamber 170A. The gas will be bubbled through liquid in receptacle 140 and escape through the opening thereof. The soft pump is released to generate negative pressure and the liquid flows from receptacle 140 to chamber 170A.
4. Optionally place cap 70 on receptacle 140 and incubate chamber 170A (by sealing the receptacle losses due to evaporation are minimized), and remove cap 70.
5. Push down on cap 36B to close valve 10B. This step may be optional as the valve 10B may already be in the closed configuration.
6. Open valve 10A (with fingers or tool 58). Cap 36A may be optionally removed entirely from device 100.
7. Tilt chip so receptacle is higher (gravitationally) than first chamber 170A. Press second soft pump reaction chamber 170B. Air bubbles through the liquid in soft pump reaction chamber 170A, and vent through the receptacle 140. Release of the second soft pump generates negative pressure and draws the liquid from first soft pump reaction chamber 170A to chamber 170B. Optionally incubate the second reaction chamber 170B with temporary closure of the cap 36A.
8. Open valves 10A,B (with a user's fingers or tool 58). Cap 36B may be optionally removed entirely from device 100.
9. Tilt chip so second chamber170B is higher (gravitationally) than third chamber 170C. Press third soft pump reaction chamber 170C. Air bubbles through the liquid in soft pump reaction chamber 170B, and vents through the receptacle 140. Release of the third soft pump generates negative pressure and draws the liquid from second soft pump reaction chamber 170B to chamber 170C. Optionally incubate the third reaction chamber 170C with temporary closure of the cap 36B.

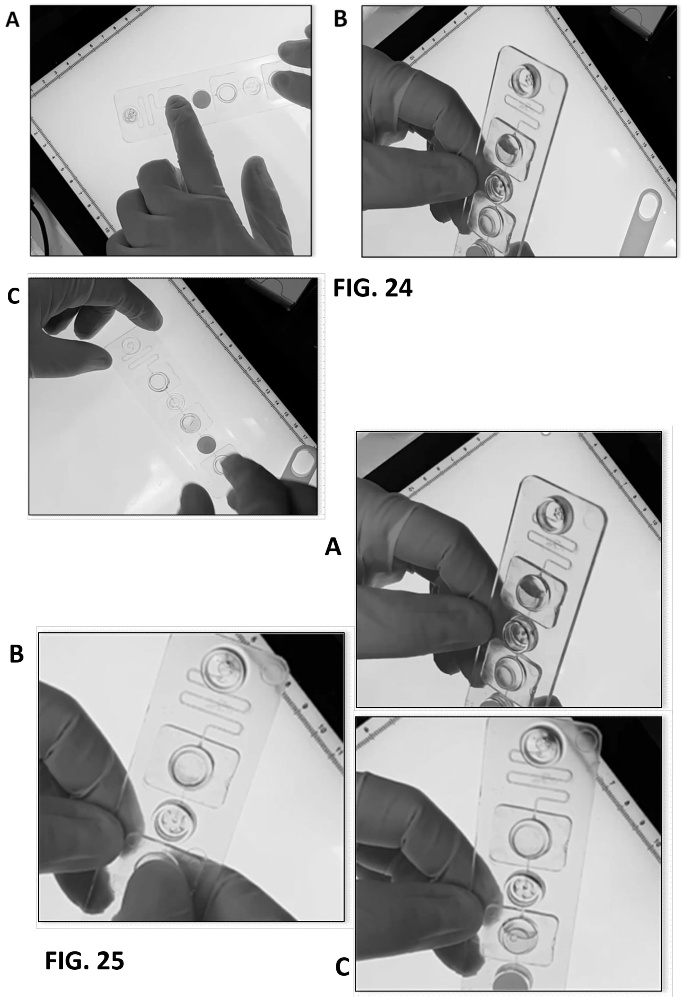

Figs. 24 to 26 are photographs of fluidic manipulation tests which demonstrate the ability to transfer multiple liquids throughout a microfluidic device with minimal or no cross-contamination. First, as shown in Fig. 24A, a yellow liquid was first deposited into the receptacle. The soft pump reaction chambers were then used to displace the yellow liquid to the first chamber 110. The second microvalve was then closed, moving the yellow liquid in the third chamber 120. A blue liquid was then deposited into the receptacle and the pumps used to transfer the blue liquid to the second chamber (130). The first microvalve was then closed, trapping the blue liquid in the second chamber (120). Finally, the green liquid was added to the receptacle and transferred to the first chamber (110).

As shown in Figs 26A and 26B, it was possible to manipulate each of the three colored liquids into separate chambers of the device (100) using a combination of the soft pump reaction chambers (110, 120, 130) and the valves.

In some embodiments, the microfluidic device may be used to perform assays requiring multiple incubations, for example, sensor assays (e.g. CRISPR CAS12b, CRISPR CAS13a), sample purification and isolation preparation, and isothermal viral DNA/RNA amplification applications. In this regard, the microvalve described herein in combination with a plurality of soft pump reaction chambers creates an ability to implement a sequential assay protocol, transfer liquid between incubations and avoid or minimize cross-contamination. For example, Fig. 27 shows how the three-chamber device from Fig. 19 can be adapted for use as an instrument-less diagnostic device for detecting a nucleic acid of interest in a saliva sample, with each of the three chambers being dedicated to a specific function (lysis, amplification, detection).

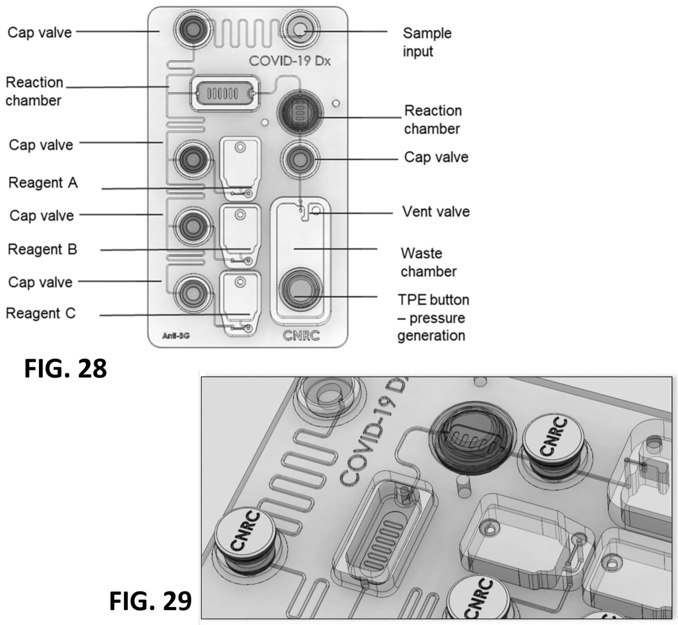

Those skilled in the art will appreciate that the cap valves described herein may also be implemented in more complex microfluidic devices. Such devices may include any one or more of multiple reaction chambers, reagent storage (e.g. lyophilized, liquid, etc.), manual fluidic displacement pumps, and complex fluid controls. Figs. 28 and 29 illustrate a complex microfluidic device design comprising a sample input, three reagent chambers which may comprise reagent stored on the device, two reaction chambers, and a waste chamber which further comprises a vent valve and a soft membrane pressure pump.

### References:

[1] Todd Thorsen et al. Microfluidic Large-Scale Integration. Science 298 (2002): 580-584.
[2] Anthony K. Au et al. Microvalves and Micropumps for BioMEMS. Micromachines 2011, 2(2), 179-220.
[3] Jin-Yuan Qian et al. Actuation Mechanism of Microvalves: A Review. Micromachines 2020, 11(2), 172.
[4] Nam-Trung Nguyen and Zhigang Wu, "Micromixers-a review", J. Micromech. Microeng. 15 (2005) R1-R16, do1:10.1088/0960-1317/15/2/R01.
[5] Bessoth F G, de Mello, A J and Manz A 1999 Microstructure, "for efficient continuous flow mixing", Anal. Commun. 36, 213-5.
[6] Liu R H et al, 2000, "Passive mixing in a three-dimensional serpentine microchannel", J. Microelectromech. Syst. 9, 190-7.
[7] Hong C C, Choi J W and Ahn C H, 2004, "A novel in-plane microfluidic mixer with modified tesla structures" Lab on a Chip 4 109-13.
[8] Miyake R et al, 1993, "Micro mixer with fast diffusion", Proc.MEMS'93, 6th IEEE Int. Workshop Micro Electromechanical System (San Diego, CA) pp 248-53.
[9] Song H et al, 2003, "Experimental test of scaling of mixing by chaotic advection in droplets moving through microfluidic channels", Appl. Phys. Lett. 83, 4664-6.
[10] Fujii et al, 2003, "A plug and play microfluidic device," Lab on a Chip, 3, 193-7.
[11] Glasgow I and Aubry N, 2003, "Enhancement of microfluidic mixing using time pulsing," Lab on a Chip, 3, 114-20.
[12] Suzuki H and Ho C M, 2002, "A magnetic force driven chaotic micro-mixer", Proc. MEMS'02, 15th IEEE Int. Workshop, Micro Electromechanical System (Las Vegas, Nevada), pp 40-3.
[13] El Moctar A O, Aubry N and Batton J, 2003, "Electro-hydrodynamic microfluidic mixer", Lab on a Chip, 3, 273-80.
[14] Oddy M H, Santiago J G and Mikkelsen J C, 2001, "Electrokinetic instability micromixing", Anal. Chem., 73 5822-32.
[15] Bau H H, Zhong J and Yi M, 2001, "A minute magneto hydrodynamic (MHD) mixer Sensors Actuators B 79 207-15.
[16] Tsai J H and Lin L, 2002, "Active microfluidic mixer and gas bubble filter driven by thermal bubble pump" Sensors, Actuators A 97-98 665-71.
[17] S. S. Wang et al, 2009, "Acoustically induced bubbles in a microfluidic channel for mixing enhancement", Microfluid Nanofluid (2009) 6:847-852, DOI 10.1007/s 10404-008-0357-6.
[15] X. Mao et la, Milliseconds microfluidic chaotic bubble mixer, Microfluid Nanofluid (2010) 8:139-144, DOI 10.1007/s10404-009-0496-4.
[16] Lin Sun, "Mixing characteristics of a bubble mixing microfluidic chip for genomic DNA extraction based on magnetophoresis: CFD simulation and experiment", Electrophoresis 2021, 42, 2365-2374.
[17] Byeong-Ui Moon et al, "An automated centrifugal microfluidic assay for whole blood fractionation and isolation of multiple cell populations using an aqueous two phase system", Lab Chip, 2021, 21, 4060.
[18] Marc A. Unger, Hou-Pu Chou, Todd Thorsen, Axel Scherer, Stephen R. Quake Monolithic Microfabricated Valves and Pumps by Multilayer Soft Lithography, Science 288 (2000): 113-116.
[19] Maria Bauer et al. Burst valves for commercial microfuidics: a critical analysis. Microfuidics and Nanofuidics (2019) 23:86.
[20] L. Clime et al., "Active pumping and control of flows in centrifugal microfluidics", Microfluidics and Nanofluidics (2019) 23:29.
[21] JK Park, et al., "Towards practical sample preparation in point-of-care testing: user-friendly microfluidic devices" Lab Chip, 2020, 20, 1191.
[22] Zhichang Du et al. Advancements in the research of finger-actuated POCT chips. Microchimica Acta (2024) 191:65.
[23] J. Park and J.-K. Park, Lab Chip, 2019, 19, 2973-2977.
[24] J. Park and J.-K. Park, Lab Chip, 2018, 18, 1215-1222.
[25] M. T. Guler, P. Beyazkilic and C. Elbuken, Sens. Actuators, A, 2017, 265, 224-230.
[26] Juhwan Park 1, Hyewon Roh , Je-Kyun Park, Micromachines 2019, 10(3), 174; https://doi.org/10.3390/mi10030174.
[27] Andersson et al., Hydrophobic valves of plasma deposited octafluorocyclobutane in DRIE channels," Sensors and Actuators B: Chemical Volume 75, Issues 1-2, 30 April 2001, Pages 136-141

All citations are hereby incorporated by reference. In the event of conflicting information with statements between any reference to or incorporated herein, and the present disclosure, the present disclosure will act as the guiding authority.

What has been described is merely illustrative of the application of the principles of the disclosure. All examples, embodiments, aspects, methods and products disclosed herein are illustrative.

## Claims

1. A substrate of a microfluidic chip, the substrate relief patterned on two opposite sides thereof to define:
a generally cylindrical sidewall protruding from a top surface of the substrate, defining a recess extending from a floor defined by the top surface, and a rim;
a first region of the cylindrical sidewall adapted for receiving a resilient deformable elastomeric membrane, which divides the recess into rim-proximal and floor-proximal parts;
at least one valve seat rising from the floor within the floor-proximal part;
a first end of a first microfluidic channel passing through, and terminating at, the valve seat, with the valve seat completely surrounding the termination;
a second end of a second microfluidic channel passing through the floor in the recess, at a position separated from the valve seat; and
a second region of the sidewall within the rim-proximal part adapted to receive a guide feature of a closing body, and to retain the closing body in a configuration that permits a mandrel of the closing body to press a seal into contact with the valve seat,
where the first and second microfluidic channels: are relief patterned on a bottom surface of the substrate, which is opposite the top surface; and have hydraulic diameters of 50-200 µm to allow flow with minor capillary effects.

2. The substrate of claim 1 wherein the valve seat has an annular shape, and the second microfluidic channel extends to a trough surrounding the valve seat.

3. The substrate of any previous claim wherein an annular seat is provided in the sidewall for receiving the membrane at the first region, or an annular feature is provided in the side wall at the second region.

4. The substrate according to any one of the preceding claims wherein the relief pattern further defines:
at least one additional opening to at least one additional channel passing through the floor within the recess at a trough surrounding the valve seat, the at least one additional opening being separated from the second opening azimuthally; or
one or more slots in the recessed surface configured to enable visual confirmation of whether a liquid is present in the first recess.

5. The substrate according to any one of the preceding claims, wherein the first region is delimited by a ledge defined by a surface extending inwardly from the base of the guiding sidewall to the valve region, wherein the circumference of the membrane contacts the guiding sidewall.

6. A kit comprising, the substrate according to any one of the preceding claims, and a closing body having a guide feature, a mandrel and a top pressing surface, the dimensions of the guide feature cooperating with those of the sidewall whereby the closing body is adapted for insertion of the mandrel into the recess end to permit force communicated from the pressing surface to urge the mandrel toward the valve seat.

7. The kit according to claim 6, wherein the closing body comprises a gripping element consisting of one or more radially outwardly extending members, which members optionally formed by overmolding a TPE onto the closing body that is formed of a thermoset or thermoplastic.

8. The kit according to claim 6 or 7 further comprising a membrane dimensioned for insertion into the recess at the first region, and thick enough so that when inserted, and the closing body is in place, pressing the top pressing surface downwards causes the mandrel to urges the membrane into sealed contect with the valve seat, where the membrane:
is composed of a thermoplastic elastomer (TPE), or a PDMS;
is separable from the substrate, and has: a mean thickness of 100 to 250 µm; or has a circumferential thickening at least 3 times the mean thickness;
the membrane is bonded continuously around its periphery at the first region and has a mean thickness of 25 to 125 µm.

9. The kit according to any one of claims 6 to 8, further comprising a resilient member dimensioned to abut at least part of a bottom surface of the membrane, wherein at least one of the following is provided:
elastic response of the membrane is less than the elastic response of the membrane with the resilient member;
the resilient member is composed of a polycarbonate;
the resilient member has a thickness of about 80-125 µm;
the resilient member modifies an extent of contact area of the membrane with the valve seat in use;
the resilient member contacts the substrate adjacent the first region;
the resilient member is bonded to the membrane.

10. The kit according to claim 8 or 9 wherein the membrane is secured to the substrate at the first region, with or without the resilient member between the membrane and the substrate.

11. The kit according to any one of claims 6 to 9, further comprising a tool for engaging the microvalve cap, the tool comprising:
a tool body having a first face and an opposing second face, the tool body having:
a handle part configured to be grasped by a user; and
a tool part spaced from the handle part, the tool part defining an opening configured to receive and abut at least part of the microvalve cap;
wherein, when the tool is engaged with the microvalve cap, movement of the handle part by a releases the closing body whereby the membrane is retracted and is not urged against the valve seat.

12. The kit according to any one of claims 6 to 11, further comprising one or more covers for sealing against a cover-meeting surface of the substrate to enclose, at least, the first microfluidic channel and the second microfluidic channel, to form a microfluidic chip.

13. The kit according to any one of claims 8 to 12 where the closing body and cylindrical wall are shaped to allow the closing body to retain the closure of the membrane against the valve seat without persistent force from the top pressing surface.

14. The kit according to any of claims 8 to 13, wherein the mandrel is fused to the upper surface of the membrane.
